(19) Europäisches Patentamt / European Patent Office / Office européen des brevets

(11) **EP 3 259 197 B1**

(12) **EUROPEAN PATENT SPECIFICATION**

(45) Date of publication and mention
of the grant of the patent:
**24.11.2021 Bulletin 2021/47**

(21) Application number: **16862579.6**

(22) Date of filing: **09.06.2016**

(51) Int Cl.:
**B65D 35/10** (2006.01)     **B32B 27/30** (2006.01)
**C08L 23/04** (2006.01)     **C08L 23/08** (2006.01)

(86) International application number:
**PCT/TH2016/000053**

(87) International publication number:
**WO 2017/078633 (11.05.2017 Gazette 2017/19)**

(54) **SHOULDER FOR A TUBE CONTAINER MADE FROM MELT-BLENDED RESIN AND TUBE CONTAINER WITH THIS SHOULDER**

SCHULTER FÜR TUBENBEHÄLTER AUS SCHMELZGEMISCHTEM HARZ UND TUBENBEHÄLTER MIT DIESER SCHULTER

ÉPAULEMENT POUR TUBE CONSTITUÉ DE RÉSINE MÉLANGÉE À L'ÉTAT FONDU ET TUBE AVEC CET ÉPAULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2015 TH 1501006648**

(43) Date of publication of application:
**27.12.2017 Bulletin 2017/52**

(73) Proprietor: **Kimpai Lamitube Co., Ltd.
Bangkok 10120 (TH)**

(72) Inventor: **LIMATIBUL, Suraparp
Bangkok 10120 (TH)**

(74) Representative: **Jones, Nicholas Andrew
Withers & Rogers LLP
2 London Bridge
London SE1 9RA (GB)**

(56) References cited:
**WO-A1-2016/028280     CN-A- 101 423 135
CN-A- 101 426 691     CN-A- 103 619 577
CN-A- 104 768 526     US-A- 5 372 863
US-A- 5 913 449     US-A1- 2004 197 505
US-A1- 2009 208 685**

**Description**

**FIELD OF THE INVENTION**

**0001** Materials science relating to a tube container with a shoulder made from a melt-blended resin.

**BACKGROUND ART**

**0002** For a packaging tube used for containing or dispensing products such as, adhesives, lubricants, lotions, medicines, shampoos, hair gels, and oral care products, the overall flavor characteristic of the said product contained in the tube generally tends to be lost as a result of the absorption and transmission of flavor additives into the packaging materials, such as a tube laminate, a shoulder, and a barrier insert. In general, the portion that is most likely to have the flavor loss is located in the shoulder of the packaging tube. Therefore, there is demand for improving or modifying the tube structure in order to reduce the flavor loss and maintain product conditions for a longer period of time.

**0003** WO0013981 A1 discloses a packaging tube for containing and dispensing contents such as a toothpaste tube having a barrier insert in the shoulder area, which is intended for providing improved oxygen and flavor barrier properties to the tube. However, the barrier insert is usually made from polybutylene terephthalate, which can withstand the injection pressures and temperatures of a plastic head, and does not crack in the head, wherein the said plastic head is generally made from high density polyethylene. It is well known in this art that this barrier insert tends to be costly, and therefore the overall package cost is increased when it is used.

**0004** WO9810995 A1 discloses a shoulder piece for assembly to a flexible tube to form a container and which is made from a composition containing high density polyethylene (HDPE) and linear low density polyethylene (LLDPE). The said shoulder piece has improved weld integrity compared to the 100% high density polyethylene shoulder piece.

**0005** However, the shoulder piece of a general tube container, such as a toothpaste tube is usually made from a material comprising a single resin such as polyethylene. Therefore, the barrier properties are poor and insufficient to preserve chemicals stored in the said tube container, such as toothpastes, creams, medicines, etc., so that it causes changing in the physical and chemical characteristics, particularly the flavor of the chemicals stored in the tube.

**0006** EP 0473176 B1 discloses a laminate-tube container used for toothpastes, foods, cosmetics, medicines or adhesives and having a shoulder improved in barrier properties, wherein the shoulder is made from a melt-blended resin composition comprising polyethylene, an ethylene-vinyl alcohol (EVOH) copolymer or a saponified ethylene-vinyl acetate copolymer and a carboxylic acid-modified adhesive polyethylene resin.

**0007** US 20050267244 A1 discloses a method of preparing a tube shoulder having barrier properties. The aid method includes: dry-blending a polyolefin resin and a resin having barrier properties/intercalated clay nanocomposite to form a nanocomposite composition and then molten-blending, pelletizing and molding the nanocomposite composition.

**0008** Ethylene-co-hydrophobic polymers or cyclic olefin copolymers (COC) are a new class of copolymers with excellent optical, thermal and anti-permeable properties. Copolymerization of olefins with a cyclic monomer produces amorphous materials having relatively high glass transition temperatures, and exhibiting various useful physical properties, such as high optical transparency, low birefringence, low moisture absorption, etc. These properties are interesting for applications in medicine industries and optical devices, particularly laser-optical devices such as CDs, DVDs, and optical lenses. However, the applications of COC are limited by mechanical durability or toughness of COC, particularly brittleness. A container made out of a melt-blended resin comprising 50-10 wt% of polyolefin and 50-90 wt% of COC wherein the COC comprises 10-90 mol% of norbornene is known from US 2004/197505.

**0009** This invention provides a tube container with a shoulder improved in barrier properties that is suitable for containing products, such as adhesives, lubricants, lotions, medicines, shampoos, hair gels, and oral care products, wherein the shoulder has very low oxygen and water transmission rates (OTR and WTR), excellent steam resistance, higher heat deflection temperature, and excellent acid and alkali resistances, and reduces an overall manufacturing cost of the tube container.

**SUMMARY OF THE INVENTION**

**0010** This present invention relates to a shoulder for a tube container according to claim 1 and to a tube container with this shoulder.

**BRIEF DESCRIPTION OF THE DRAWINGS**

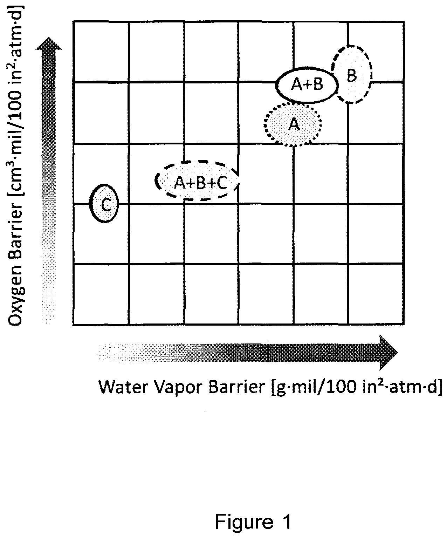

**0011** Figure 1 summarizes the oxygen and water vapor barrier of a blended resin.

**DETAILED DESCRIPTION**

**0012** This present invention relates to a tube container having a shoulder with improved barrier properties, wherein the shoulder is made from a melt-blended resin comprising a polyolefin and an ethylene-co-hydrophobic polymer.

**0013** The polyolefin used for forming the shoulder according to examples may be polypropylene, high density polyethylene (HDPE having density of 0.94 g/cc or more), medium density polyethylene (MDPE having density in the range of 0.93 to 0.94 g/cc), low density polyethylene (LDPE having density in the range of 0.91 to 0.93 g/cc), and linear low density polyethylene (LLDPE having a density in the range of 0.91 to 0.93 g/cc). The polyolefin suitably used for forming the shoulder is high density polyethylene or high density polyethylene blended together with linear low density polyethylene.

**0014** The preferred ethylene-co-hydrophobic polymer is a cyclic olefin copolymer used for forming the shoulder according to this invention, which may be a commercial cyclic olefin copolymer that may be the cyclic olefin copolymer formed from a cyclic monomer such as norbornene, or dicyclopentadiene, wherein a favorable cyclic monomer is norbornene, 1,3- dicyclopentadiene, and 5-vinyl-2-norbornene, or may be the cyclic olefin copolymer formed from a linear monomer such as ethane, or other alphaolefins such as propene and 1-butene.

**0015** The preferred cyclic olefin copolymer is a cyclic olefin copolymer having 20-40% of the cyclo-olefin which provides high temperature resistance due to higher heat deflection temperature, and excellent resistances to acids such as an acetic acid, and to alkalis such as soap solution, or ammonia solution.

**0016** In one example a shoulder is made from a melt-blended resin comprising 65-95% of a polyolefin and 5-35% of an ethylene-co-hydrophobic polymer, preferably 65-95% of HDPE and 5-35% of the ethylene-co-hydrophobic polymer.

**0019** According to the invention, a shoulder of a tube container is made from a melt-blended resin comprising HDPE, LLDPE, and a cyclic olefin copolymer, preferably 50-90% of HDPE, 5-15% of LLDPE, and 5-35% of the cyclic olefin copolymer.

**0020** In one embodiment of this invention, a shoulder of a tube container is made from a melt-blended resin comprising HDPE, LDPE, LLDPE, and a cyclic olefin copolymer, preferably 50-90% of HDPE, 5-15% of a blend of LDPE and LLDPE, and 5-35% of the cyclic olefin copolymer.

**0021** Oxygen transmission rate and steam transmission rate are two important properties of materials used for determining the shelf life of the container according to this invention. The melt-blended resin (A+B+C) comprising: (A) HDPE; (B) LLDPE; and (C) a cyclic olefin copolymer exhibits improved oxygen and steam barrier properties as compared with a resin comprising only HDPE (A), or a resin comprising only LLDPE (B), or a blended resin (A+B) comprising HDPE (A) and LLDPE (B), or a resin comprising only the cyclic olefin copolymer (C) as shown in Fig. 1, wherein the oxygen barrier property is measured by using ASTM D3985-05, and the steam barrier property is measured by using ASTM F1249-06.

**0022** In one embodiment of this invention, a tube container has a body and a shoulder, wherein the shoulder made from a melt-blended resin comprising a polyolefin and an ethylene-co-hydrophobic polymer is molded by injection or by using a press machine into a single layer.

**0023** In one example a tube container has a body and a shoulder, wherein the shoulder is made from a melt-blended resin comprising 65-95% of a polyolefin and 5-35% of an ethylene-co-hydrophobic polymer, preferably 65-95% of HDPE and 5-35% of the ethylene-co-hydrophobic polymer.

**0024** In one example a tube container has a body and a shoulder, wherein the shoulder is made from a melt-blended resin comprising 65-95% of a polyolefin and 5-35% of an ethylene-co-hydrophobic polymer, preferably 65-95% of LLDPE and 5-35% of the ethylene-co-hydrophobic polymer.

**0025** In one embodiment of this invention, a tube container has a body and a shoulder, wherein the shoulder is made from a melt-blended resin comprising HDPE, LLDPE, and a cyclic olefin copolymer, preferably 50-90% of HDPE, 5-15% of LLDPE, and 5-35% of the cyclic olefin copolymer.

**0026** In one example a tube container has a body and a shoulder, wherein the shoulder is made from a melt-blended resin comprising HDPE, LDPE, and a cyclic olefin copolymer, preferably 50-90% of HDPE, 5-15% of LDPE, and 5-35% of the cyclic olefin copolymer.

**0027** In one embodiment of this invention, a tube container has a body and a shoulder, wherein the shoulder is made from a melt-blended resin comprising HDPE, LDPE, LLDPE, and a cyclic olefin copolymer, preferably 50-90% of HDPE, 5-15% of a blend of LDPE and LLDPE, and 5-35% of the cyclic olefin copolymer.

**0028** The tube container can be formed according to a well- known process in this art. For example, the process for forming the tube container comprises: loading a hollow tube body onto a mandrel in order to move it to receive a hot blended doughnut-shaped HDPE; closing and compressing a shoulder mold, wherein the shoulder is made from a melt-blended resin comprising a polyolefin and an ethylene-co-hydrophobic polymer; and compressing it into the shape by the mandrel in order to obtain the shoulder mounted with the tube body.

Analysis of Weight Loss and Flavor Loss

0029 Standard toothpaste is filled into each of 5 tube samples with equal amount, and each tube sample is weighted and then sealed. Thereafter, the tube samples each filled with said standard toothpaste are placed into a glass jar conditioned to be temperature of 25°C and relative humidity of 70%, and the tube samples are left in said condition for 12 days, 27 days, 39 days, 45 days, 63 days, 78 days, 90 days, and 102 days. The weight loss (%) and the flavor loss are evaluated for each time interval according to the following details.

$$\text{Weight Loss (\%)} \ = \ (\,(\text{Initial Weight} - \text{Weight at Given Time Interval}) \div \text{Initial Weight}) \ \text{x} \ 100$$

Flavor Loss evaluated by Smelling:
+++ High Flavor Loss, ++ Medium Flavor Loss, + Low Flavor Loss , x No Flavor Loss
0030 The results of the analysis of the weight loss and the flavor loss of the toothpaste stored in the 5 tube samples (Table 1) are shown in Table 2.

Table 1

| Tube Sample | Shoulder Composition (%) | | |
|---|---|---|---|
| | HDPE | LLDPE | ethylene-co-hydrophobic polymer |
| HDPE 100% | 100 | - | - |
| KPL-(C)5% | 90 | 5 | 5 |
| KPL-(C)10% | 85 | 5 | 10 |
| KPL-(C)15% | 75 | 10 | 15 |
| KPL-(C)20% | 70 | 10 | 20 |

Table 2

| Tube Sample | Weight Loss (%), Flavor Loss | | | | | | | |
|---|---|---|---|---|---|---|---|---|
| | 12 days | 27 days | 39 days | 45 days | 63 days | 78 days | 90 days | 102 days |
| HDPE 100% | 0.00, + | 0.02, + | 0.04, ++ | 0.04, +++ | 0.03, +++ | 0.03, +++ | 0.03, +++ | 0.03, +++ |
| KPL-(C)5% | 0.00, x | 0.02, x | 0.05, + | 0.05, + | 0.01, + | 0.01, ++ | 0.01, ++ | 0.01, ++ |
| KPL-(C)10% | 0.00, x | 0.01, x | 0.02, x | 0.02, x | 0.02, + | 0.02, ++ | 0.02, ++ | 0.02, ++ |
| KPL-(C)15% | 0.00, x | 0.01, x | 0.01, x | 0.01, x | 0.00, x | 0.00, + | 0.00, + | 0.00, + |
| KPL-(C)20% | 0.00, x | 0.01, x | 0.01, x | 0.01, x | 0.00, x | 0.00, x | 0.00, x | 0.01, + |

0031 From Table 1, each tube sample with the shoulder made from the melt-blended resin comprising the polyolefin and the ethylene-co-hydrophobic polymer lengthens the shelf life of the product contained therein by improving properties in order to prevent the weight loss and the flavor loss of the contents as compared with the shoulder made from only HDPE.

## Claims

1. A shoulder for a tube container made from a melt-blended resin, the melt-blended resin comprising: high density polyethylene having a density of 0.94 g/cc or more, linear low density polyethylene having a density in the range of 0.91 to 0.93 g/cc, and a cyclic olefin copolymer.

2. The shoulder according to claim 1, comprising: 50% - 90% HDPE; 5% - 15% LLDPE; and 5% - 35% cyclic olefin copolymer.

3. The shoulder according to claim 1, further comprising a low density polyethylene having a density in the range of 0.91 to 0.93 g/cc.

4. The shoulder according to claim 3, comprising: 50% - 90% HDPE; 5% - 15% a blend of LDPE and LLDPE; and 5% - 35% cyclic olefin copolymer.

5. The shoulder according to any preceding claim, wherein the cyclic olefin copolymer is formed from monomers selected from: norbornene or dicyclopentadiene.

6. The shoulder according to claim 5, wherein the monomers are selected from: norbornene, 1,3-dicyclopentadiene, and 5-vinyl-2-norbornene.

7. The shoulder according to any of claims 1 to 4, wherein the cyclic olefin copolymer is formed from linear alphaolefins.

8. The shoulder according to claim 7, wherein the alphaolefins are selected from: propene and 1-butene.

9. A tube container having:

a body; and
a shoulder as defined in any of claims 1 to 8.


**Patentansprüche**

1. Schulter für einen Tubenbehälter, hergestellt aus einem schmelzgemischten Harz, wobei das schmelzgemischte Harz umfasst: Polyethylen hoher Dichte mit einer Dichte von 0,94 g/cm$^3$ oder höher, lineares Polyethylen niedriger Dichte mit einer Dichte im Bereich von 0,91 g/cm$^3$ bis 0,93 g/cm$^3$, und ein Cycloolefin-Copolymer.

2. Schulter nach Anspruch 1, umfassend: 50% - 90% HDPE; 5% - 15% LLDPE; und 5% - 35% Cycloolefin-Copolymer.

3. Schulter nach Anspruch 1, des Weiteren umfassend ein Polyethylen niedriger Dichte mit einer Dichte im Bereich von 0,91 g/cm$^3$ bis 0,93 g/cm$^3$.

4. Schulter nach Anspruch 3, umfassend: 50% - 90% HDPE; 5% - 15% einer Mischung aus LDPE und LLDPE; und 5% - 35% Cycloolefin-Copolymer.

5. Schulter nach einem der vorhergehenden Ansprüche, wobei das Cycloolefin-Copolymer aus Monomeren gebildet ist, die ausgewählt sind aus Norbornen oder Dicyclopentadien.

6. Schulter nach Anspruch 5, wobei die Monomere ausgewählt sind aus Norbornen, 1,3-Dicyclopentadien und 5-Vinyl-2-Norbornen.

7. Schulter nach einem der Ansprüche 1 bis 4, wobei das Cycloolefin-Copolymer aus linearen Alphaolefinen gebildet ist.

8. Schulter nach Anspruch 7, wobei die Alphaolefine ausgewählt sind aus Propen und 1-Buten.

9. Tubenbehälter, bestehend aus:

einem Körper; und
einer Schulter nach einem der Ansprüche 1 bis 8.


**Revendications**

1. Épaulement pour récipient tubulaire constitué d'une résine mélangée à l'état fondu, la résine mélangée à l'état fondu comprenant : du polyéthylène haute densité ayant une densité de 0,94 g/cm$^3$ ou plus, du polyéthylène linéaire basse densité ayant une densité dans la plage de 0,91 à 0,93 g/cm$^3$, et un copolymère d'oléfine cyclique.

**2.** Épaulement selon la revendication 1, comprenant : 50 % à 90 % de HDPE ; 5 % à 15 % de LLDPE ; et 5 % à 35 % de copolymère d'oléfine cyclique.

**3.** Épaulement selon la revendication 1, comprenant en outre un polyéthylène basse densité ayant une densité dans la plage de 0,91 à 0,93 g/cm$^3$.

**4.** Épaulement selon la revendication 3, comprenant : 50 % à 90 % de HDPE ; 5 % à 15 % d'un mélange de LDPE et LLDPE ; et 5 % à 35 % de copolymère d'oléfine cyclique.

**5.** Épaulement selon l'une quelconque des revendications précédentes, dans lequel le copolymère d'oléfine cyclique est formé de monomères choisis parmi : du norbornène ou dicyclopentadiène.

**6.** Épaulement selon la revendication 5, dans lequel les monomères sont choisis parmi : du norbornène, 1,3-dicyclopentadiène, et 5-vinyl-2-norbornène.

**7.** Épaulement selon l'une quelconque des revendications 1 à 4, dans lequel le copolymère d'oléfine cyclique est formé d'alphaoléfines linéaires.

**8.** Épaulement selon la revendication 7, dans lequel les alphaoléfines sont choisies parmi : du propène et 1-butène.

**9.** Récipient tubulaire ayant :

un corps ; et
un épaulement tel que défini dans l'une quelconque des revendications 1 à 8.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0013981 A1
- WO 9810995 A1
- EP 0473176 B1
- US 20050267244 A1
- US 2004197505 A